# EUROPÄISCHE PATENTSCHRIFT

(11) **EP 2 606 608 B1**
(45) Veröffentlichungstag und Bekanntmachung des Hinweises auf die Patenterteilung: **18.12.2019**
(21) Anmeldenummer: 11761293.7
(22) Anmeldetag: 18.08.2011
(51) Int. Cl.: H04L 12/24

(54) **ERWEITERUNG FÜR DAS SIMPLE NETWORK MANAGEMENT PROTOCOL (SNMP) UM INFORMATIONEN ÜBER DEN STATUS VON SET-PDUS ZU ERMITTELN**
EXTENSION FOR THE SIMPLE NETWORK MANAGEMENT PROTOCOL (SNMP) IN ORDER TO ASCERTAIN INFORMATION ON THE STATUS OF SET-PDUS
EXTENSION POUR LE PROTOCOLE DE GESTION DE RÉSEAU SIMPLE (SNMP) POUR DÉTERMINER DES INFORMATIONS SUR LE STATUT DE SET-PDU

(30) Priorität: 20.08.2010 DE 102010035040
(43) Veröffentlichungstag der Anmeldung: 26.06.2013
(73) Patentinhaber: Hirschmann Automation and Control GmbH, 72654 Neckartenzlingen (DE)
(72) Erfinder: WALDEN, Andreas, 72124 Pliezhausen (DE)
(74) Vertreter: Greif, Thomas
(86) Internationale Anmeldenummer: PCT/EP2011/064233
(87) Internationale Veröffentlichungsnummer: WO 2012/022786

(56) Entgegenhaltungen:
- EP-A1- 1 729 444
- US-A1- 2004 006 619
- US-B1- 6 275 853

## Beschreibung

Die Erfindung betrifft ein Verfahren zum Betreiben einer Netzwerkmanagementstation (auch Management Information Base, kurz: MIB genannt), die Daten über Busverbindungen mit den an ihr angeschlossenen Netzwerkgeräten mittels des SNMP-Protokolls austauscht, wobei in jedem Netzwerkgerät ein Agent integriert ist, der den Zustand des Netzwerkgerätes erfasst und dort auch selbst Einstellungen vornehmen oder Aktionen auslösen kann, indem er über SET- und GET-Befehle mit der Netzwerkmanagementstation kommuniziert, wobei weiterhin über das SNMP-Protokoll eine Fehlererkennung und / oder eine Fehlerbenachrichtigung zwischen der Netzwerkmanagementstation und dem jeweiligen Agenten erfolgt, gemäß den Merkmalen des Oberbegriffes des Patentanspruches 1.

Basis der Erfindung ist das Simple Network Management Protokoll (kurz: SNMP genannt), bei dem es sich um ein Netzwerkprotokoll handelt, um Netzwerkelemente (auch Netzwerkgeräte, Netzwerkinfrastrukturgeräte oder ähnlich genannt, wie zum Beispiel Router, Server, Switches, Drucker, Computer usw.) von einer zentralen Station aus (der MIB) überwachen und steuern zu können. Das Protokoll regelt dabei die Kommunikation zwischen den überwachten Geräten und der Netzwerkmanagementstation. SNMP beschreibt den Aufbau der Datenpakete, die gesendet werden können, und den Kommunikationsablauf. Es wurde dabei so ausgelegt, dass jedes netzwerkfähige Gerät, welches in einem Netzwerk eingesetzt wird, mit in die Überwachung aufgenommen werden kann. Zu den Aufgaben des Netzwerkmanagements, die mit dem SNMP-Protokoll möglich sind, zählen die Überwachung von Netzwerkinfrastrukturgeräten, die Fernsteuerung und Fernkonfiguration von Netzwerkinfrastrukturgeräten sowie die Fehlererkennung und Fehlerbenachrichtigung in dem Fall, dass in dem Netzwerkgerät ein Fehler erkannt worden ist.

Durch seine Einfachheit, Modularität und Vielseitigkeit hat sich dieses Protokoll insbesondere in der Automatisierungstechnik, aber auch schon in Büroumgebungen, zum Standard entwickelt, der sowohl von den meisten Managementprogrammen (herstellerspezifisch) als auch von Endgeräten unterstützt wird. So ist als Vorteil von SNMP anzusehen, dass es nicht auf das Netzwerkprotokoll IP als Transportmedium angewiesen ist.

Entsprechend den Vorgaben des standardisierten SNMP-Protokolls werden zur Überwachung der Netzwerkgeräte sogenannte Agenten eingesetzt. Dabei handelt es sich um Programme, die direkt auf den überwachten Netzwerkgeräten laufen. Diese Programme sind in der Lage, den Zustand des Netzwerkgerätes zu erfassen und auch selbst Einstellungen vorzunehmen oder Aktionen auslösen zu können. Mit Hilfe von SNMP ist es möglich, dass die zentrale Netzwerkmanagementstation mit den Agenten über ein Netzwerk (Busverbindungen) kommunizieren kann. Hierzu gibt es verschiedene Datenpakete (wie zum Beispiel GET und SET), die zwischen der Netzwerkmanagementstation und dem Agenten und umgekehrt gesendet werden können. Diese Datenpakete sind gemäß SNMP standardisiert und bekannt. Neben diesen Befehlen, die ausgetauscht werden können, sei noch auf den Befehl TRAP hingewiesen, bei dem es sich um eine unaufgeforderte Nachricht von einem Agenten an die Netzwerkmanagementstation handelt, dass ein Ereignis eingetreten ist. Mit diesem Befehl wird also selbstständig ein Datenpaket von dem Agenten an die Netzwerkmanagementstation gesendet, ohne dass es von dieser angefordert wird. Im Regelfall wird ein TRAP gesendet, um eine Fehlfunktion des Netzwerkgerätes (zum Beispiel einen Defekt eines Modules eines Netzgerätes) zu melden. Darüber hinaus kann dieses Datenpaket aber auch geschickt werden, wenn die in einem SET-Datenpaket beschriebenen Datensatzänderungen nicht durchgeführt werden konnten.

Ein wesentlicher Nachteil des SNMP-Protokolls, insbesondere in den Versionen 1 und 3, ist darin zu sehen, dass die Fehlercodes, die auf Anforderung oder selbstständig von einem Agenten zu der Netzwerkmanagementstation geschickt werden, nicht erweiterbar sind. Das heißt, dass aufgrund der Standardisierung bestimmte vorgegebene Fehlercodes festgelegt sind und diese bei Anwendung des SNMP-Protokolls zwingend eingesetzt werden müssen. Eine Erweiterung dieser Fehlercodes sowohl hinsichtlich ihrer Anzahl als auch ihres Inhaltes ist gemäß diesem Standard nicht vorgesehen.

Um diesen wesentlichen Nachteil in der Praxis zu beseitigen, ist schon daran gedacht worden, für den Datenaustausch nicht mehr das SNMP-Protokoll, sondern andere Standards zu verwenden. Diese funktionieren zwar hinsichtlich ihrer Funktionalität ebenfalls, haben jedoch den entscheidenden Nachteil, dass es sich hierbei nicht um flächendeckend eingeführte und herstellerseitig anerkannte Übertragungsmedien handelt, so dass diese vernünftigerweise kommerziell nicht genutzt werden und daher nur in Nischen zur Anwendung kommen. Daher steht die vorliegende Erfindung im Fokus, eine Erweiterung für das SNMP-Protokoll vorzusehen, mit der die Nachteile beseitigt werden. Ein weiterer Nachteil ist im Übrigen darin zu sehen, dass von der Netzwerkmanagementstation abgesandte SET-Anfragen von dem Agenten des jeweiligen Netzwerkgerätes nicht in der vorgegebenen Zeit abgearbeitet werden können, wobei die Zeit für die Bearbeitung von der Netzwerkmanagementstation vorgegeben wird. Ziel hierbei ist es, die Anfrage in einer möglichst kurzen Zeit durchzuführen, um den Datenaustausch nicht unnötig zu verzögern. Allerdings reicht die für den Agenten zur Verfügung gestellte Zeit oftmals nicht aus, damit er seine internen Prozesse für die Beantwortung der Anfrage abzuarbeiten. Dies führt zu einer Überschreitung bei der Anfrage, so dass der angefragte Agent gezwungen ist, eine Fehlermeldung an die Netzwerkmanagementstation abzugeben.

Um die vorstehend genannten Nachteile zu beseitigen, sind im Stand der Technik schon verschiedene Lösungen vorgesehen worden.

Aus der US 7,120,833 ist eine Erweiterung des Fehler-Datenpaketes der PDU (Protokoll Data Unit) auf 32 Bit vorgesehen, um spezifische Fehlercodes, die in dieser Form in dem SNMP-Protokoll nicht vorgesehen und auch nicht verwendet werden können, übertragen zu können. Hierbei handelt es sich im Regelfall um herstellerspezifische Fehlercodes, wobei das in der US 7,120,833 beschriebene Verfahren an und für sich sehr einfach ist. Der Nachteil besteht jedoch darin, dass die Netzwerkmanagementstation dafür eingerichtet sein muss, diese erweiterten Dateninhalte mit den über das SNMP-Protokoll hinausgehenden Fehlercodes zu verarbeiten. Das hat jedoch den Nachteil, dass herstellerspezifisch ausgestaltete Netzwerkmanagementstationen und die zugehörigen Netzwerkgeräte (zum Beispiel des Herstellers X) nicht mit entsprechenden Netzwerkmanagementstationen und zugehörigen Netzwerkgeräten des Herstellers Y kompatibel sind. Dies ist für den Einsatz solcher Geräte ein nachteiliger und entscheidender Hinderungsgrund. Selbst wenn diese unterschiedlichen Netzwerkmanagementstationen beziehungsweise Netzwerkgeräte unterschiedlicher Hersteller zueinander kompatibel sein sollten, ist es nicht möglich, aufgrund der nicht standardisierten Daten (Erweiterung der Datenpakete für die Fehlercodes) diese Geräte mit Geräten anderer Hersteller, die das SNMP-Protokoll einhalten, einzusetzen.

Aus der US 2004/163016 werden Fehlercodes beschrieben, die mittels TRAP übersandt werden. Hierbei ist jedoch der Nachteil gegeben, dass das Webinterface des Gerätes und der zugehörigen Netzwerkmanagementstation einen offenen Zugang haben muss, um solche TRAP-Befehle übermitteln zu können. Außerdem ist nicht garantiert, dass das von einem Agenten eines Netzwerkgerätes abgesandte TRAP die Netzwerkmanagementstation erreicht. So können Fehler in dem jeweiligen Netzwerkgerät vorliegen und abgesandt werden, aber auf dem Weg zur Netzwerkmanagementstation verloren gehen, so dass diese den Empfang nicht quittieren kann.

Eine ähnliche Lösung mit den entsprechenden Nachteilen, wie zu der US 7,120,833 beschrieben, ist aus der US 2009/204697 bekannt.

Die Druckschrift EP1729444 A1, beschreibt den Betrieb eines auf SNMP (Simple Network Management Protocol) basierenden asynchronen Kommunikationsmechanismus, wobei das Agent-Modul den empfangenen GET-REQUEST-Befehl analysiert; und wenn das Agent-Modul feststellt, dass mehrere Rückmeldungen zurückgegeben werden müssen, sendet das Agent-Modul in Serie mehrere TRAP-Nachrichten an das Managermodul.

Unter Berücksichtigung der vorstehend genannten Nachteile soll mit der Erfindung eine Erweiterung des SNMP-Protokolls bereitgestellt werden, mit dem auf Basis des standardisierten und flächendeckend eingesetzten SNMP-Protokolls auch Fehlercodes, die gemäß diesem Standard nicht vorgesehen sind, zu übertragen. Dabei soll ein besonderes Augenmerk darauf gelegt werden, dass die Übertragung sicher und zuverlässig erfolgt.

Diese Aufgabe ist durch die Merkmale des Patentanspruches 1 gelöst.

Basierend auf dem Datenaustausch zwischen der zumindest einen Netzwerkmanagementstation und dem zumindest einen an ihr angeschlossenen Netzwerkgerät, vorzugsweise mehreren Netzwerkgeräten, nach dem Standard des SNMP-Protokolls ist erfindungsgemäß vorgesehen, dass zusätzlich zu dem nach dem SNMP-Protokoll vorgesehenen Datenaustausch ein weiterer Datenaustausch zwischen der Netzwerkmanagementstation und dem jeweiligen Agenten eines Netzwerkgerätes erfolgt, um mit diesem Datenaustausch weitere Dateninhalte zwischen der Netzwerkmanagementstation und dem jeweiligen Agenten auszutauschen.

In vorteilhafter Weise wird der standardisierte Datenaustausch zwischen der zumindest einen Netzwerkmanagementstation und dem zumindest einen angeschlossenen Netzwerkgerät unter Ausnutzung des standardisierten SNMP-Protokolls dahingehend erweitert, dass nach diesem Standard ein weiterer Datenaustausch erfolgt. Dabei werden jedoch nicht die nach dem Standard vorgesehenen Dateninhalte transportiert, sondern weitere Dateninhalte zwischen dem Agenten eines Netzwerkgerätes und der Netzwerkmanagementstation (und umgekehrt) ausgetauscht, wobei diese Dateninhalte gegenüber die nach dem SNMP-Protokoll vorgesehenen Dateninhalte erweitert sind. Dadurch wird in vorteilhafter Weise möglich, die Kompatibilität von Netzwerkmanagementstationen und Netzwerkgeräten, die alle den SNMP-Standard unterstützen, beizubehalten. Dies hat vor allen Dingen den Vorteil, dass Netzwerkmanagementstationen sowie Netzwerkgeräte unterschiedlicher Hersteller untereinander kompatibel bleiben. Gleichzeitig wird die Möglichkeit geschaffen, zwischen diesen insbesondere herstellerspezifisch konfigurierten Geräten und Netzwerkmanagementstationen zusätzliche Dateninhalte auszutauschen, die entweder von der Netzwerkmanagementstation von dem Agenten abgefordert oder von dem Agenten unaufgefordert an die Netzwerkmanagementstation abgegeben werden können. Dadurch wird in vorteilhafter Weise die Funktionalität des Standards SNMP zwecks Datenaustauschs zwischen Geräten unterschiedlicher Hersteller (und natürlich auch gleicher Hersteller) nicht nur beibehalten, sondern auch wesentlich erweitert. Außerdem wird vermieden, dass SET-Anfragen vom Agenten nicht in der von der Netzwerkmanagementstation vorgegebenen Zeit abgearbeitet werden, eine Zeitüberschreitung bei der Operation erfolgt, da der Agent zunächst die Anfrage der Netzwerkmanagementstation in dem Sinne der Netzwerkmanagementstation beantworten kann, dass noch eine Operation durchgeführt werden muss, so dass die Netzwerkmanagementstation innerhalb der vorgegebenen Zeit zunächst eine Antwort erhält. Der Dateninhalt der Antwort ist dabei so, dass nach den standardisierten Vorgaben kein Fehlerfall vorliegt. Erst in der nächsten Anfrage der Netzwerkmanagementstation, zu der sie von der Antwort aufgefordert wird, oder durch eine unaufgeforderte Abgabe einer Antwort durch den Agenten an die Netzwerkmanagementstation wird der Dateninhalt mit derjenigen Antwort des Agenten an die Netzwerkmanagementstation abgegeben, die vorher nicht hätte bearbeitet werden können. Dabei ist der Dateninhalt aufgrund des zusätzlichen Datenaustausches (Anfrage und Antwort beziehungsweise nur unaufgeforderte Antwort) nicht standardgemäß, sondern kann weitere Dateninhalte, insbesondere herstellerspezifische Dateninhalte umfassen.

In Weiterbildung der Erfindung enthält der zusätzliche Datenaustausch als Dateninhalte zumindest einen Fehlercode. Das bedeutet, dass mit diesem zusätzlichen Datenaustausch nicht nur Dateninhalte betreffend die Überwachung der Netzwerkgeräte und die Fernsteuerung beziehungsweise Fernkonfiguration von Netzwerkgeräten durch die Netzwerkmanagementstation übertragen werden können, sondern dass diese Dateninhalte auch Fehlercodes zur Fehlererkennung beziehungsweise Fehlerbenachrichtigung enthalten, wobei wichtig ist, dass diese zusätzlichen Fehlercodes gemäß SNMP-Standard nicht vorgesehen sind. Dadurch kann in vorteilhafter Weise der SNMP-Standard um Informationen über den Fehler durch die Ergänzung beliebiger, insbesondere herstellerspezifischer Fehlercodes erweitert werden.

Weiterhin ist in einer Ausgestaltung der Erfindung vorgesehen, dass der zusätzliche Datenaustausch über OID (Object Identifier) gemäß dem SNMP-Protokoll durchgeführt wird. Dadurch kann für den "normalen" und den "zusätzlichen" Datenaustausch das standardisierte SNMP-Protokoll verwendet und gleichzeitig erweitert werden.

In Weiterbildung der Erfindung werden die weiteren Dateninhalte von dem Agenten in Abhängigkeit der zuvor durchgeführten Fehlererkennung von dem Agenten bereitgestellt. Das bedeutet, dass die weiteren Dateninhalte in vorteilhafter Weise herstellerspezifisch in dem Agenten des Netzwerkgerätes abgelegt (gespeichert) sind und auf Anfrage oder unaufgefordert an die Netzwerkmanagementstation abgegeben werden können. Dabei ist in Weiterbildung der Erfindung vorgesehen, dass der Agent den zusätzlichen Dateninhalt aus einer hinterlegten Tabelle ermittelt und diesen selbsttätig (mittels TRAP) oder auf Anforderung durch die Netzwerkmanagementstation (mittel GET) an diese übermittelt. Da der Standard SNMP selber nicht definiert, welche Werte ein Netzwerkgerät liefern kann oder muss (da dies von der Art des jeweiligen Netzwerkgerätes abhängt), werden die Werte, die von der Netzwerkmanagementstation über die angeschlossene (gemanagte) Netzwerkkomponente (Netzwerkgerät) ausgelesen und verändert werden können, in einer Tabelle, der sogenannten Management Information Base (kurz: MIB) beschrieben. Die Werte, die von der Netzwerkmanagementstation über das gemanagte Netzwerkgerät ausgelesen und verändert werden können, sind die sogenannten "Managed Objects". Dabei handelt es sich um Beschreibungsdateien, in denen die einzelnen Werte tabellarisch aufgeführt werden. Die MIB ist jeweils spezifisch für ein bestimmtes Netzwerkgerät oder eine Gruppe von Netzwerkgeräten, wie zum Beispiel Switches. Die Informationen der MIB sind in Form einer Baumstruktur organisiert, deren einzelne Zweige entweder durch Nummern oder alternativ durch alphanumerische Bezeichnungen dargestellt werden können. Diese aus Punkten und Zahlen bestehende Zeichenkette sind die Object Identifier (kurz: OID). In den einzelnen Management Information Bases wird dann weiter verzweigt, bis zu den einzelnen Daten, die jeweils auch eine eigene OID besitzen und somit eindeutig identifiziert werden können. Das bedeutet, dass in vorteilhafter Weise unter Anwendung des vorstehend beschriebenen Standards des SNMP-Protokolls Daten zwischen Geräten unter Nutzung des Standards, der jetzt erfindungsgemäß erweitert worden ist, ausgetauscht werden können.

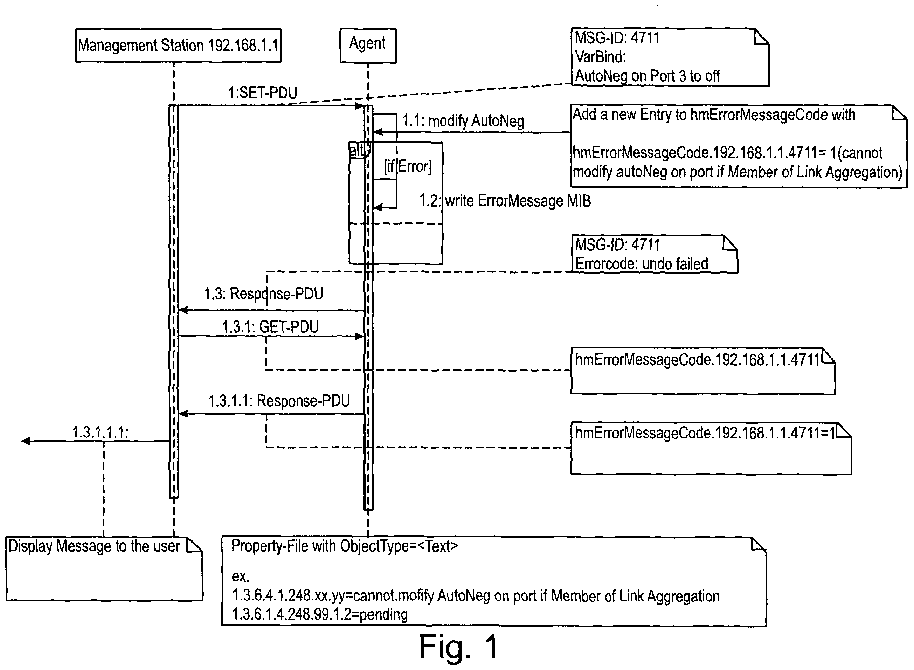

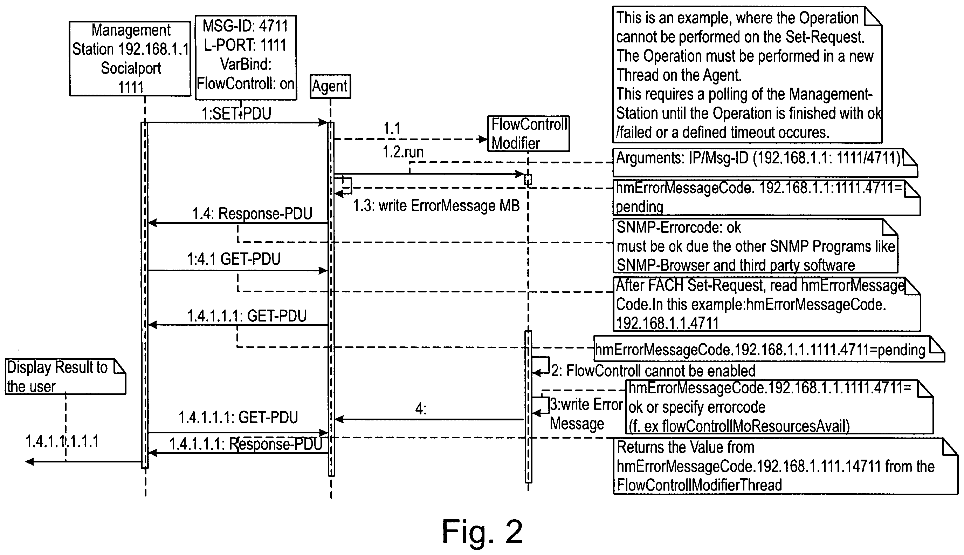

Die Erfindung ist im Folgenden unter Berücksichtigung der Figuren 1 und 2, erläutert.

Die MIB (Management Information Base) in den Figuren 1 und 2 beschreibt ein erfindungsgemäßes zusätzliches Verfahren für die Ausgangssituationen, die vorstehend im Stand der Technik dargestellt sind. Figur 1 betrifft ein Sequenzdiagramm für synchrones Handling zwischen der Netzwerkmanagementstation und dem zumindest einen Agenten. Figur 2 betrifft ein Sequenzdiagramm für asynchrones Handling zwischen der Netzwerkmanagementstation und dem zumindest einen Agenten.

Nach jedem SET-Request - unabhängig vom Ergebnis - wird ein GET-Request auf das MIB-Attribute "hmSNMPExtCode" ausgeführt. Die Instanz wird aus der lokalen IP-Adresse, der lokalen Portnummer und dem Nachrichtenidentifier berechnet, der den SET-Request enthält.

Wenn der Agent die Extension-MIB unterstützt, kann folgendes passieren:
1. Die Anfrage war ok, somit ist der Wert die Oid von der Object-Identity "hmSNMPExtCodeNoError".
2. Die Anfrage war nicht ok. Dies führt zu:
   a. Der Oid von der Object-identity "hmSNMPExtCodeGenericError", wenn keine Zusatzinformationen vom Agenten zur Verfügung stehen.
   b. Der Oid von einer spezifischen Object-Identity, welche in einer herstellerspezifischen MIB deklariert ist.
3. Die Anfrage benötigt mehr Zeit zur Abarbeitung. Dies führt zur Oid von der Object-Identity "hmSNMPExtCodePending". Nachdem die Anfrage vom Agenten bearbeitet wurde, hängt der Rückgabewert vom Ergebnis ab.

Wenn der Anfrager oder der Agent diese Extension-MIB nicht unterstützt, müssen die Ergebniswerte die gleichen sein wie mit Unterstützung der MIB. Nur wenn der Anfrager und der Agent diese Extension-MIB unterstützen, können erweiterte Fehlerinformationen ausgegeben werden.

Es wird empfohlen, dass die sysOrTable vom Agenten unterstützt wird. Dies vermeidet zusätzliche Anfragen an Agenten, die die HM-SNMP-Protocol-Extension-MIB nicht unterstützen.

Wichtig für die Erfindung ist es, dass das erfindungsgemäße Verfahren auf Basis des SNMP-Standards und nicht für NAT-Anwendungen eingesetzt wird, da bei diesen NAT-Anwendungen kein Spin-Block vorhanden ist, welches für die Ausführung des SNMP-Verfahrens zwingend erforderlich ist.

Das bedeutet, dass die vorliegende Erfindung den SNMP-Standard voraussetzt, während es für NAT-Anwendungen (NAT: Network Address Translation, ein Verfahren, das in Routern eingesetzt wird, die lokale Netzwerke mit dem Internet verbinden), keine Anwendung findet.

Im Folgenden ist ein beispielhafter Programmablauf zur Verdeutlichung des erfindungsgemäßen Verfahrens wiedergegeben:

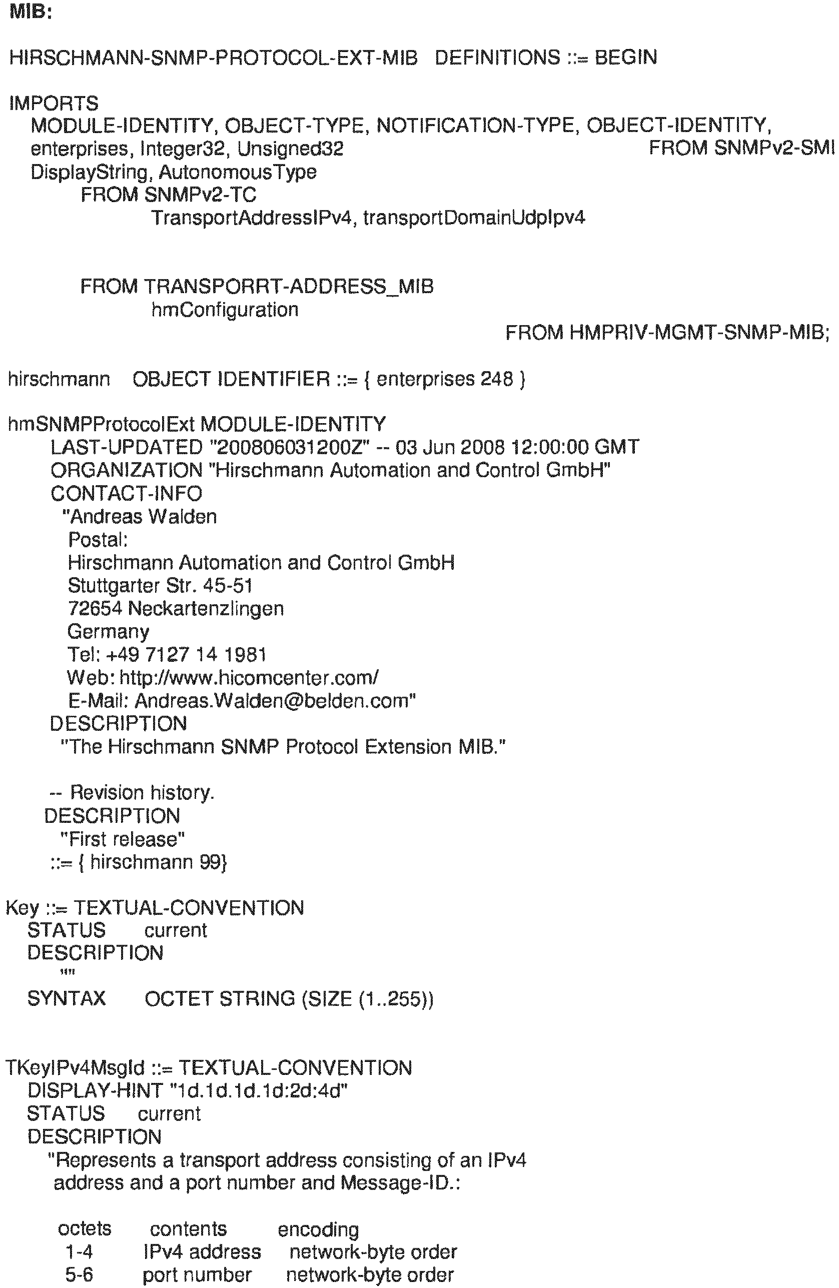

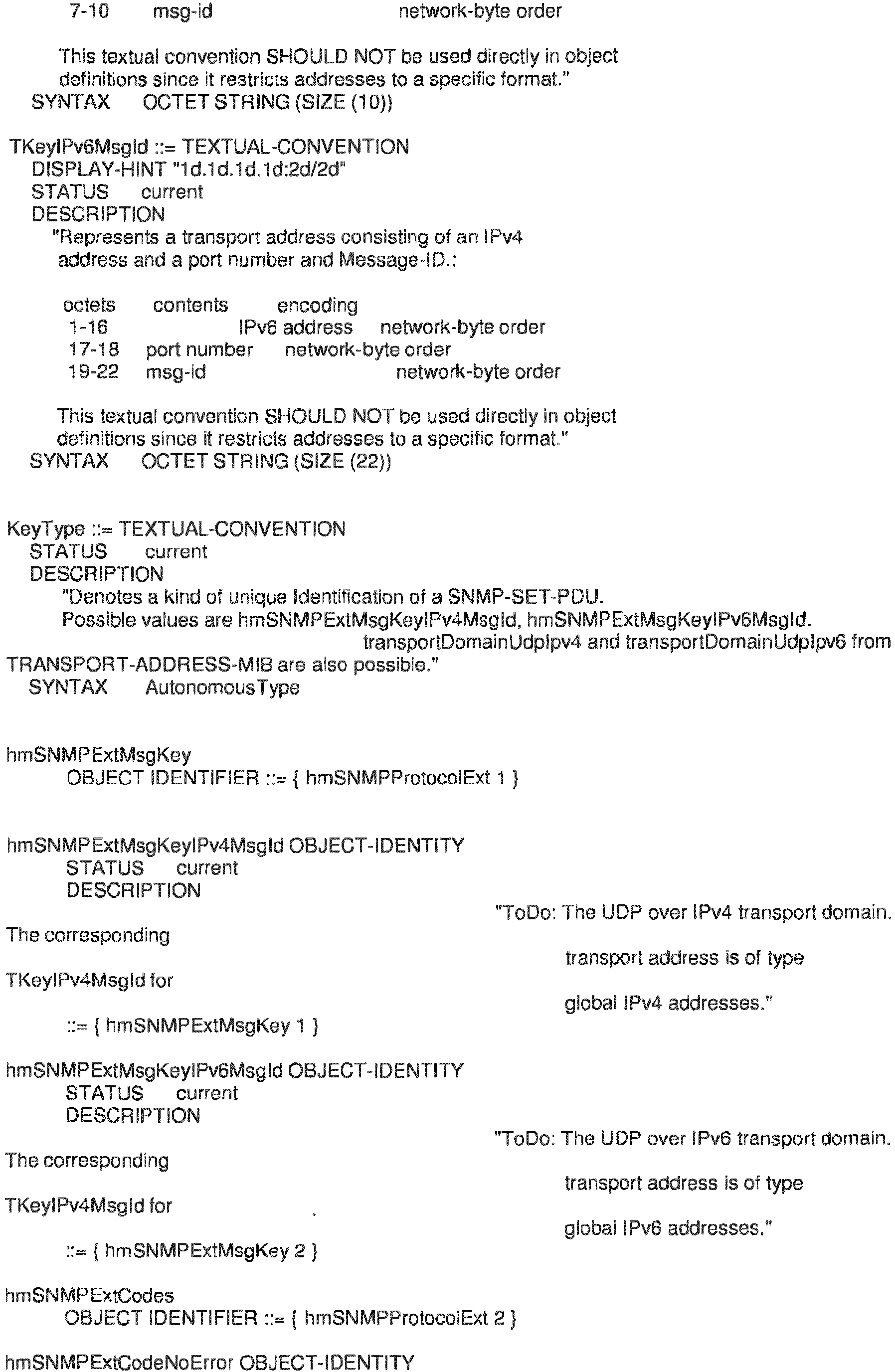

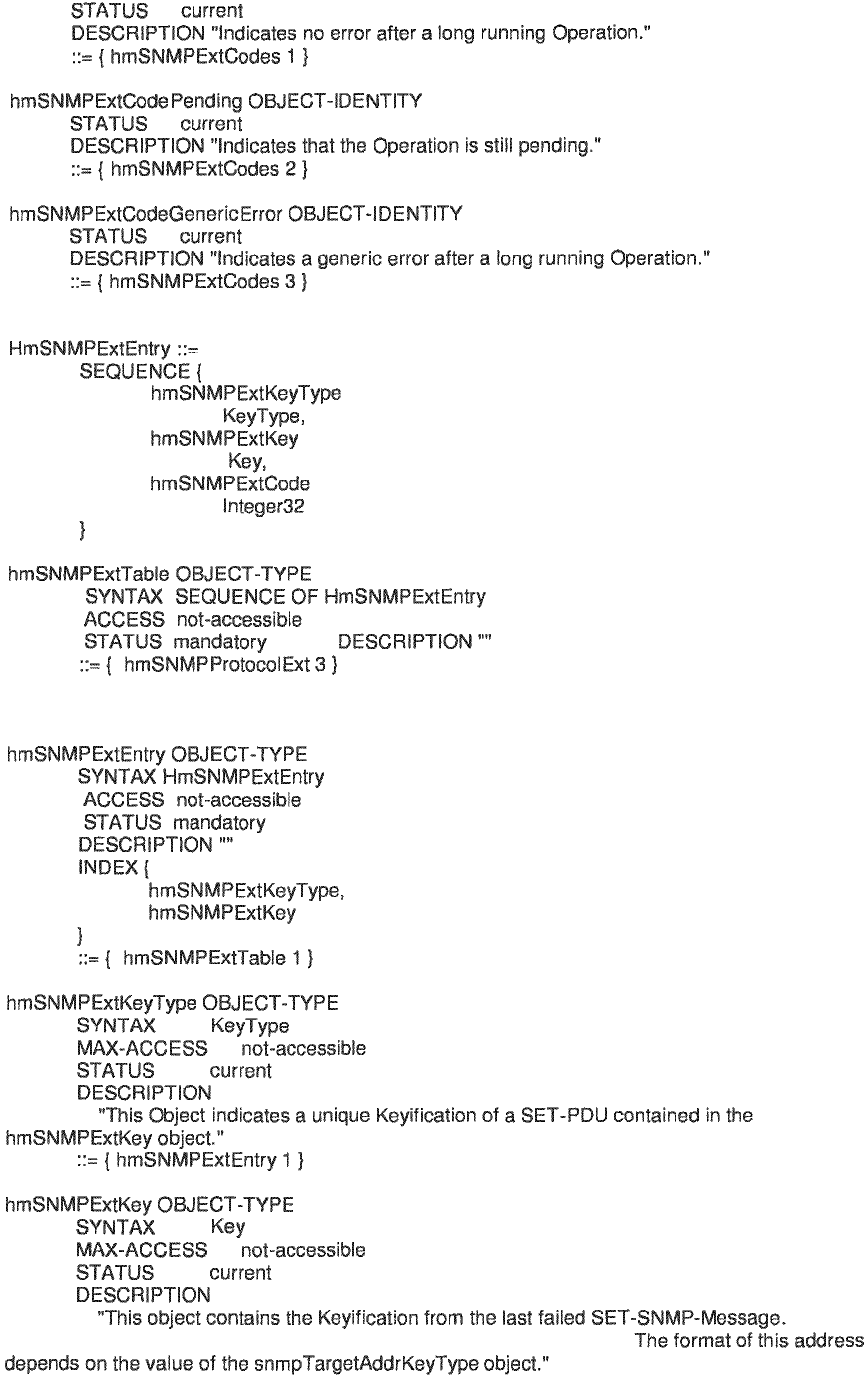

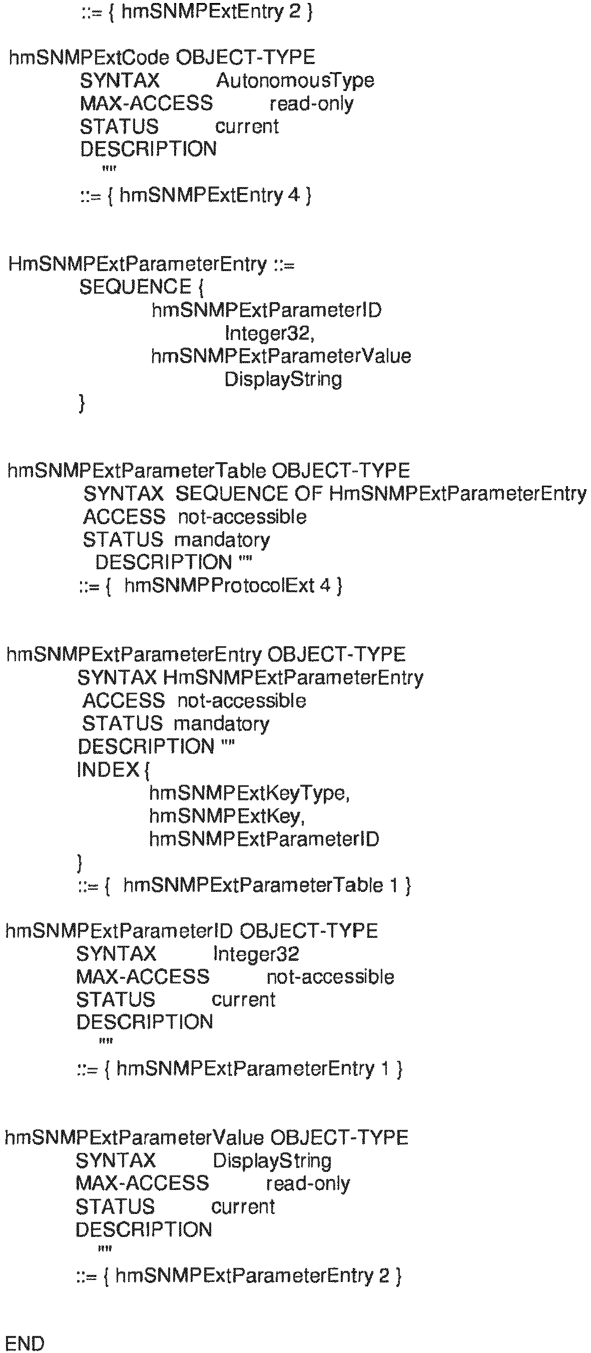

## Patentansprüche

1. Verfahren zum Betreiben einer Netzwerkmanagementstation, die Daten über Busverbindungen mit den an ihr angeschlossenen Netzwerkgeräten mittels des Simple Network Management-Protokolls austauscht, wobei in jedem Netzwerkgerät ein Agent integriert ist, der den Zustand des Netzwerkgerätes erfasst und dort auch selbst Einstellungen vornehmen oder Aktionen auslösen kann, indem er über SET- und GET-Befehle mit der Netzwerkmanagementstation kommuniziert, wobei weiterhin über das Simple Network Management-Protokoll eine Fehlererkennung und/oder eine Fehlerbenachrichtigung zwischen der Netzwerkmanagementstation und dem jeweiligen Agenten erfolgt, **dadurch gekennzeichnet, dass** zusätzlich zu dem nach dem Simple Network Management-Protokoll vorgesehenen Datenaustausch erst in einer nächsten Anfrage der Netzwerkmanagementstation, zu der sie von der Antwort aufgefordert wird, ein weiterer Datenaustausch zwischen der Netzwerkmanagementstation und dem jeweiligen Agenten erfolgt, um mit diesem Datenaustausch weitere Dateninhalte zwischen der Netzwerkmanagementstation und dem jeweiligen Agenten auszutauschen.

2. Verfahren zum Betreiben einer Netzwerkmanagementstation nach Anspruch 1, **dadurch gekennzeichnet, dass** der zusätzliche Datenaustausch als Dateninhalte einen Fehlercode enthält.

3. Verfahren zum Betreiben einer Netzwerkmanagementstation nach Anspruch 1 oder 2, **dadurch gekennzeichnet, dass** der zusätzliche Datenaustausch über Object Identifier, OID, gemäß dem SNMP-Protokoll durchgeführt wird.

4. Verfahren zum Betreiben einer Netzwerkmanagementstation nach Anspruch 1, 2 oder 3, **dadurch gekennzeichnet, dass** die weiteren Dateninhalte von dem Agenten in Abhängigkeit der zuvor durchgeführten Fehlererkennung von dem Agenten bereitgestellt werden.

5. Verfahren zum Betreiben einer Netzwerkmanagementstation nach Anspruch 4, **dadurch gekennzeichnet, dass** der Agent den zusätzlichen Dateninhalt aus einer hinterlegten Tabelle ermittelt und an die Netzwerkmanagementstation übermittelt.

6. Verfahren zum Betreiben einer Netzwerkmanagementstation nach Anspruch 4, **dadurch gekennzeichnet, dass** der Agent den zusätzlichen Dateninhalt aus einer hinterlegten Tabelle ermittelt und diesen auf Anforderung durch die Netzwerkmanagementstation an diese übermittelt.

## Claims

1. Method for operating a network management station interchanging data with the network devices connected thereto via bus connections by means of the Simple Network Management Protocol, wherein each network device has an agent integrated in it that detects the state of the network device and can also itself make adjustments or trigger actions thereon by using SET and GET commands to communicate with the network management station, wherein furthermore the Simple Network Management Protocol is used to effect error recognition and/or error notification between the network management station and the respective agent, **characterized in that** in addition to the data interchange provided for according to the Simple Network Management Protocol, a further data interchange between the network management station and the respective agent is effected, only in a next enquiry by the network management station, which it is asked for by the response, in order to use this data interchange to interchange further data content between the network management station and the respective agent.

2. Method for operating a network management station according to Claim 1, **characterized in that** the additional data interchange contains an error code as data content.

3. Method for operating a network management station according to Claim 1 or 2, **characterized in that** the additional data interchange is performed by means of object identifiers, OID, according to the SNMP protocol.

4. Method for operating a network management station according Claim 1, 2 or 3, **characterized in that** the further data content is provided by the agent on the basis of the previously performed error recognition by the agent.

5. Method for operating a network management station according to Claim 4, **characterized in that** the agent ascertains the additional data content from a stored table and transmits it to the network management station.

6. Method for operating a network management station according to Claim 4, **characterized in that** the agent ascertains the additional data content from a stored table and transmits it to the network management station at the request of the latter.

## Revendications

1. Procédé d'utilisation d'une station de gestion de réseau qui échange des données par l'intermédiaire de connexions de bus avec les appareils de réseau qui lui sont raccordés aux moyens du protocole de Simple Network Management (gestion de réseau simple), dans lequel, dans chaque appareil de réseau, est intégré un agent qui détecte l'état de l'appareil de réseau et peut aussi y procéder de manière autonome à des réglages ou déclencher des actions par le fait qu'il communique par des instructions SET et GET avec la station de gestion de réseau simple, sachant en outre que, par l'intermédiaire du protocole de gestion de réseau simple, une détection d'erreurs et/ou un message d'erreur entre la station de gestion de réseau et l'agent respectif se produit, **caractérisé en ce que**, en plus de l'échange de données prévu d'après le protocole de gestion de réseau simple, il se produit, seulement dans une demande suivante de la station de gestion de réseau que la réponse lui demande de faire, un autre échange de données entre la station de gestion de réseau et l'agent respectif afin, par cet échange de données, d'échanger d'autres contenus de données entre la station de gestion de réseau et l'agent respectif.

2. Procédé d'utilisation d'une station de gestion de réseau selon la revendication 1, **caractérisé en ce que** l'échange de données supplémentaires contient comme contenu de données un code d'erreur.

3. Procédé d'utilisation d'une station de gestion de réseau selon la revendication 1 ou 2, **caractérisé en ce que** l'échange de données supplémentaire est exécuté par l'intermédiaire d'un identifiant d'objet OID (Object Identifier) conformément au protocole SNMP.

4. Procédé d'utilisation d'une station de gestion de réseau selon la revendication 1, 2 ou 3, **caractérisé en ce que** les autres contenus de données sont mis à disposition par l'agent en fonction de la détection d'erreurs précédemment réalisée par l'agent.

5. Procédé d'utilisation d'une station de gestion de réseau selon la revendication 4, **caractérisé en ce que** l'agent détermine le contenu de données supplémentaire à partir d'un tableau enregistré et le transfère à la station de gestion de réseau.

6. Procédé d'utilisation d'une station de gestion de réseau selon la revendication 4, **caractérisé en ce que** l'agent détermine le contenu de données supplémentaire à partir d'un tableau enregistré et le transfère sur demande de la station de gestion de réseau à celle-ci.
